# EUROPEAN PATENT SPECIFICATION

(11) **EP 4 019 182 B1**
(45) Date of publication and mention of the grant of the patent: **13.08.2025**
(21) Application number: 21212690.8
(22) Date of filing: 07.12.2021
(51) Int. Cl.: B23K 26/32, B23K 103/20

(54) **METHOD FOR WELDING DISSIMILAR METAL MATERIALS BY MEANS OF LASER**
VERFAHREN ZUM SCHWEISSEN VON UNTERSCHIEDLICHEN METALLWERKSTOFFEN MITTELS LASER
PROCÉDÉ DE SOUDAGE DE MATÉRIAUX MÉTALLIQUES DIFFÉRENTS À L'AIDE D'UN LASER

(30) Priority: 08.12.2020 EP 20000442; 23.12.2020 ES 202031295
(43) Date of publication of application: 29.06.2022
(73) Proprietor: Universidade de Vigo, 36310 Vigo, Pontevedra (ES); VIGOTEC, S.L., 36314 Vigo, Pontevedra (ES)
(72) Inventor: WALLERSTEIN FIGUEIROA, Daniel, E-36310 Vigo, Pontevedra (ES); LUSQUIÑOS RODRÍGUEZ, Fernando, E-36280 Vigo, Pontevedra (ES); COMESAÑA PIÑEIRO, Rafael, E-36280 Vigo, Pontevedra (ES); RIVEIRO RODRÍGUEZ, Antonio, E-36280 Vigo, Pontevedra (ES); POU SARACHO, Juan María, E-36280 Vigo, Pontevedra (ES)
(74) Representative: ABG Intellectual Property Law, S.L.

(56) References cited:
- CN-A- 102 764 934
- CN-A- 104 014 934
- JP-A- 2020 131 271
- US-A1- 2012 074 111
- VOLLERTSEN FRANK THOMY CLAUS: "Laser-MIG hybrid welding of aluminium to steel ? A straightforward analytical model for wetting length", WELDING IN THE WORLD, SPRINGER, DE, vol. 55, no. 1-2, 1 January 2011 (2011-01-01), pages 58 - 66, XP001561243, ISSN: 0043-2288

## Description

### FIELD OF THE ART

The present invention is comprised in the techniques of joining dissimilar materials, with these materials being chemically different. In particular, the present invention relates to the joining of metal materials having a different chemical composition by means of laser welding, see e.g. CN 102 764 934 A, US 2012/074111 A1, JP 2020 131271 A or CN 104 014 934 A.

The technique described in the present invention allows dissimilar metal materials to be welded by means of the action of a laser beam.

### BACKGROUND OF THE INVENTION

Due to environmental problems, reduction of greenhouse gas (GHG) emissions has become a necessity. The Intergovernmental Panel on Climate Change (IPCC) has called for an urgent reduction of emissions to prevent irreversible environmental damage. In this sense, reducing vehicle weight is fundamental for reducing GHG emissions in the transportation industry, which is one of the main sources of said gases. Lightweight materials play an important role in weight reduction, and aluminum alloys stand out mainly as a result of their high strength-to-weight ratio and relatively low production costs.

Although aluminum production generates between 2.5 and 3 times more GHG than steel production, the use of aluminum generally results in a net reduction of GHG emissions throughout its life cycle. The use of vehicles with a high aluminum content compensates for increased GHG emissions in aluminum production, and this leads to a net reduction of GHG emissions.

A strategy to achieve weight reduction, which is receiving increasingly more attention, is the combination of materials with different properties. A significant vehicle weight reduction can thereby be achieved when several materials are used, which translates directly into a cost reduction. There is therefore a need to develop technologies for joining different or dissimilar materials so as to make vehicle design and manufacture based on the use of several materials viable.

One of the most interesting combinations of dissimilar materials is the combination of steels with aluminum alloys. This is due to the fact that when joining these two materials, properties such as the low weight, good formability, and corrosion resistance of aluminum can be combined with the hardness, mechanical strength, and ductility of steel.

Although there is a growing trend to replace mild steel with high resistance steels, mild steel is still largely used in the transportation industry. Mild steel is still extremely appealing for the transportation industry due to its low cost along with a good shock resistance behavior, such that most bumper components of a passenger vehicle are formed by aluminum and mild steel.

Moreover, the joining of these two materials is a very complicated task due to the significant differences between their properties. The difference between the melting points of two different materials to be joined causes defects in the welded joint. These defects include, among others, the appearance of cracks and porosity.

However, the main problem when welding materials having a different chemical composition, such as when welding aluminum with steel, relates to the formation of intermetallic compounds (IMC) in the interface between these materials, which can cause the embrittlement of the joint and the subsequent failure during service.

Some earlier inventions resort to the solution which uses the overlap welding or lap welding configuration. In that sense, document JP2001-252777A describes a method for welding two dissimilar materials in an overlap welding configuration by means of a laser beam. Likewise, document US 7,850,059 B2 describes another method for welding dissimilar materials in an overlap configuration by means of applying a high-energy source and subjecting both materials to a high temperature simultaneously.

Patent US 8,492,675 B2 describes a method for welding dissimilar materials in which a bevel or groove having curved shapes is established between the two parts to be joined. This entails an additional step compared with the direct welding of sheets in a butt welding configuration.

One of the techniques used for welding dissimilar metal materials in a butt welding configuration is the simultaneous use of two laser beams. In this case, the ends of the parts to be welded must be machined into a V shape. The simultaneous use of two beams entails a not insignificant technical complexity, whereas the process of machining the parts to be welded beforehand entails an increase in time and costs that is not insignificant.

Another one of the techniques used in the attempt of welding dissimilar metal materials in a butt welding configuration is the simultaneous application of a strong magnetic field and a laser beam. The use of a strong magnetic field entails a practical limitation of the system as regards its industrial implementation and an increase in the cost of the equipment required for carrying out the welding.

To solve all these difficulties, the present invention proposes a simpler method that does not require the prior machining of the parts to be joined, does not require using two laser beams simultaneously, and does not require using an additional magnetic field as indicated in the mentioned state of the art.

In particular, the method of the present invention uses a single laser beam as the main tool for joining dissimilar metal materials in a butt welding configuration.

### DESCRIPTION OF THE INVENTION

The present invention provides a method for the welded joining of dissimilar metal materials in a butt welding configuration according to claim 1. The dependent claims define preferred embodiments of the invention.

In a first and only inventive aspect, there is provided a method for the welded joining of two parts made of dissimilar metal materials in a butt welding configuration by means of a laser beam, said method comprising the following steps:
- before contacting the two parts applying an auxiliary material in powder form on the edge of one or of both parts made of dissimilar metal materials to be joined, the auxiliary material being applied right in the contact area between the two dissimilar metal materials to be welded,
- placing the two parts made of dissimilar metal materials (2, 3) to be joined facing one another in a butt welding configuration, establishing the contact area between the two parts,
- applying a laser beam on the part made of a material having a lower melting point, the laser beam being focused such that the diameter of the irradiated area is such that the irradiance reached on the material having a lower melting point allows melting this material without the material having a higher melting point melting,
- providing a welding wire in the irradiated area (5), simultaneously with the interaction of the laser beam with the material having a lower melting point, wherein the auxiliary material and the welding wire also melt and mix with the material having a lower melting point.

It shall be understood that two materials are dissimilar when their chemical composition is different.

It shall be understood that the welding configuration is a butt welding configuration when the two welded parts are facing one another edgewise, without the superimposition of any of the parts, being joined to one another by one of their ends. The auxiliary material applied in the first step of the described method is a material in powder form and having a composition different from the composition of the two parts to be joined. Advantageously, this allows providing an additional material having a different chemical composition to the joining area of the two parts, with this auxiliary material being welded together with a portion of the part made of a material having a lower melting point in order to form the welded joint between the two parts to be joined.

In one embodiment, the auxiliary material applied in powder form is made up of alloys containing Si, alloys containing Si and Al, alloys containing Si, Al, and Mg, and more preferably alloys AlSi5, AlSi10, AlSi12, AlSi10Mg, Al7Si0.3Mg, Ni11Cr3.7Si2.75Fe2.2B0.5C, Al5Si, Al10Si0.4Mg, and even more preferably alloys AlSi5, AlSi10, or AlSi12.

In an embodiment of the method of the present invention, the step of applying a laser beam on the part made of a material to be welded with a lower melting point, said laser beam is from a laser source the wavelength of which is within the range of 157 nm to 10064 nm, preferably within the range of 300 nm to 2000 nm.

In an embodiment of the method, the mean power of the laser source is within the range of 500 W to 5000 W, and more preferably within the range of 1200 W to 3000 W. In one embodiment, the irradiance of the laser beam on the material having a lower melting point is in the range between 500 W/mm² and 2000 W/mm², and more preferably in the range between 800 W/mm² and 1000 W/mm².

Advantageously, an irradiance comprised in this range allows an optimal welded joining of the proposed parts.

In one embodiment, the diameter of the area irradiated by the laser beam is in the range between 0.1 mm and 3 mm, and more preferably the diameter of the area irradiated by the laser beam is in the range between 0.2 mm and 2.4 mm.

In one embodiment, the laser source used for generating the radiation of the laser beam is selected from Nd:YAG, Nd:glass, Nd:YVO₄, Er:YAG, Yb:YAG, Tm:YAG, diode, fiber, disk, CO₂, CO, HeCd, copper vapor laser, iodine laser, argon laser, krypton laser, or chemical lasers (HF, DF).

In one embodiment, the interaction time between the laser beam and the material having a lower melting point (2) is in the range between 100 ms and 250 ms, and more preferably in the range between 150 ms and 200 ms.

In one embodiment, the specific point energy of the laser beam is in the range between 300 J and 500 J, and the specific energy relative to the offset distance is in the range between 250 and 550 J/mm, and more preferably the specific point energy is in the range between 350 J and 400 J, and the specific energy relative to the offset distance is in the range between 300 and 500 J/mm.

In one embodiment, the specific point energy of the laser beam is in the range between 300 J and 500J.

In one embodiment, the laser beam is focused on the material having a lower melting point at an offset distance from the contact area with the material having a higher melting point. In one embodiment, the offset distance at which the laser beam is focused is comprised between 0.1 mm and 10 mm, and more preferably between 0.5 mm and 2 mm.

In one embodiment, the specific energy relative to the offset distance of the laser beam is in the range between 250 and 550 J/mm, and more preferably the specific point energy is in the range between 350 J and 400 J, and the specific energy relative to the offset distance of the laser beam is in the range between 300 and 500 J/mm.

In an embodiment, the two parts to be joined through a welding process are in the form of a flat sheet, with their edges perpendicular to the corresponding surfaces of the sheets, i.e., with straight welding edges.

In an embodiment of the method, the dissimilar materials to be welded are, on one hand Fe-based materials, and on the other, Al-based materials. Preferably, the material having a higher melting point is steel and the material having a lower melting point is an aluminum alloy.

In an embodiment, the two materials to be joined are placed on a base or support which allows the vertical position of the joint to be adjusted. In an embodiment, this base or support allows excess heat energy to be discharged into the welding process.

Optionally, the method of joining two parts by means of a welding process object of the present invention is carried out in vacuum or in the presence of an inert gas atmosphere. In one embodiment, this inert gas can be Ar, He, N₂, or mixtures thereof.

Advantageously, this inert gas atmosphere provides protection during the welding process against the formation of oxides which may be disadvantageous in the attainment of a good welded joint. In one embodiment, the welding wire provided on the joining area of the two parts to be joined is made up of the material having a lower melting point. In one embodiment, the welding wire used can be ER1100, ER 1050, ER 2319, ER 4047, ER 5052, ER 5056, or ER 5356, and more preferably ER4047 or ER5356.

In one embodiment, the welding wire feeding speed is in the range between 10 and 100 mm/s, and more preferably in the range between 20 and 50 mm/s.

The method of the present invention allows the welded joining of dissimilar metal materials in a butt welding configuration to be obtained in a very simple and quick manner compared with other alternative methods in which there is need to perform prior machining of the edge of the parts to be welded. In the present method, another remarkable advantage is that a prior machining of the two parts made of dissimilar metal materials to be joined by means of welding is not required.

The method of the present invention does not require the application of a double laser beam or the simultaneous application of a laser beam and a magnetic field. The results are obtained with a relatively simple system based on the use of a single laser beam on the parts to be welded without requiring prior machining and with the provision of a welding wire and powder placed beforehand. Welded joints with high mechanical properties are thereby obtained.

### DESCRIPTION OF THE DRAWINGS

To complement the description that is being made and for the purpose of helping to better understand the features of the invention, the following figures are attached as an integral part of said description.
Figure 1 shows a general view of the geometric configuration required for carrying out the method of the present invention in a particular embodiment.
Figure 2 shows a detail of the relative position of the laser beam with respect to the joining area or line of the two materials to be welded in a particular embodiment.
Figure 3 shows a photograph of a straight section of a welded joint consisting of two dissimilar materials made by means of a particular embodiment of the method object of the present invention.
Figure 4 shows a detail of the interface between a steel and an aluminum alloy that are welded by means of a particular embodiment of the method object of the present invention.
Figure 5 shows a photograph obtained by means of an electron transmission microscope of the area with intermetallic compounds obtained by welding mild steel and an aluminum-silicon-magnesium alloy by means of a particular embodiment of the method object of the present invention. The three electron diffraction patterns corresponding to three different intermetallic compounds formed in said interface are included.

### DETAILED DESCRIPTION OF THE INVENTION

The present invention relates to a method for the welded joining of two parts of dissimilar materials (2, 3) in a butt welding configuration.

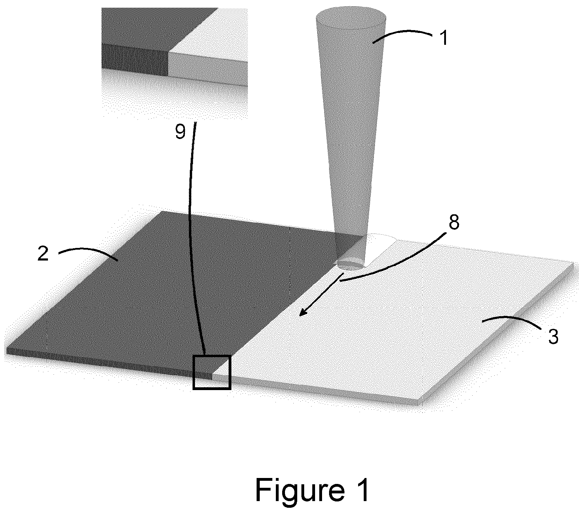

Figure 1 shows the basic geometric configuration for the implementation of the method object of the present invention. In that sense, the material having a lower melting point or temperature (3) is located facing the material having a higher melting point or temperature (2). The two parts made of dissimilar metal materials (2, 3) are therefore in direct contact in a butt welding configuration. The laser beam (1) from a laser source not shown in the figure is focused on the part made of a material having a lower melting point (3). When a relative movement occurs between this laser beam (1) and the set of two materials to be welded (2, 3), the welded joint is obtained.

Before contacting the two parts (2, 3), an auxiliary material in powder form must be applied right in the contact area (9) between the two materials to be welded (2, 3). As shown in Figure 1, the ends of the two parts of the two materials to be welded (2, 3) do not require prior machining and are welded in a butt welding configuration, with the faces of these two materials (2, 3) to be welded being perfectly perpendicular to the surface of the material itself. In other words, preparation of the joint in the shape of a V, a rounded groove, or a chamfer, is not required.

The laser beam (1) moves over one of the parts to be joined along a longitudinal direction (8).

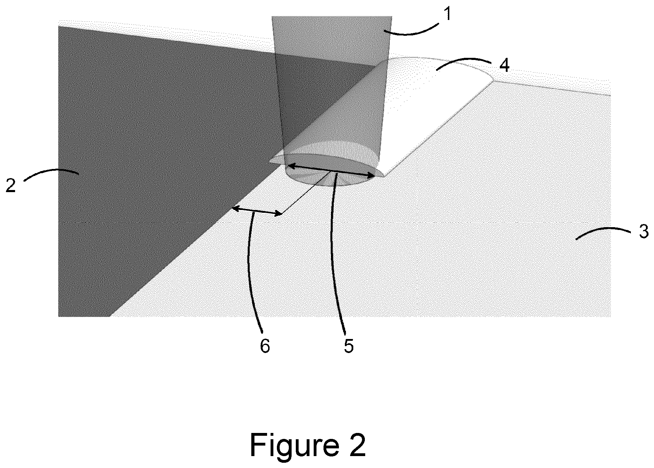

Figure 2 shows a detail of the basic geometric configuration for the implementation of the method object of the present invention. The laser beam (1) is focused on the material having a lower melting point (3) at an offset distance (6) from the contact area (9) with the material having a higher melting point (2). The laser beam (1) must be focused such that the diameter of the irradiated area (5) is such that the irradiance reached on the material having a lower melting point (3) allows melting this material (3), forming the welding bead (4) without the material having a higher melting point (2) melting. In addition to the laser beam (1), a welding wire, not depicted in the figure, suited to the composition of the two materials (2, 3) to be welded must be provided in the irradiated area (5).

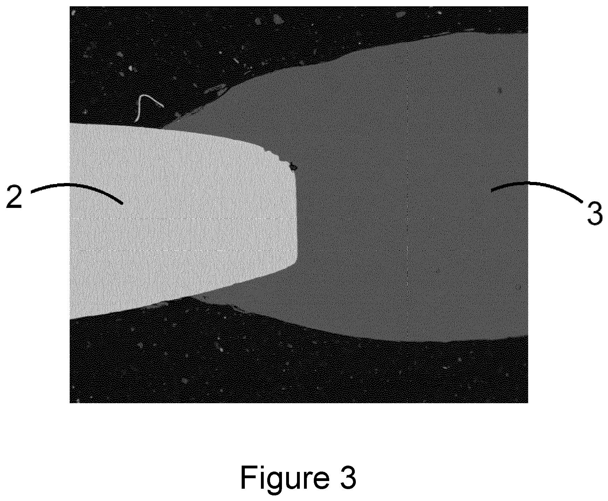

Figure 3 shows a detailed cross-section view of the joining area between the two materials to be welded (2, 3). It can be observed that the material having a higher melting point (2) has not melted. In contrast, the material having a lower melting point (3) has melted completely, overlapping the material having a higher melting point (2) in the upper and lower parts. The powder auxiliary material and the welding wire have also melted and mixed with the material having a lower melting point (3).

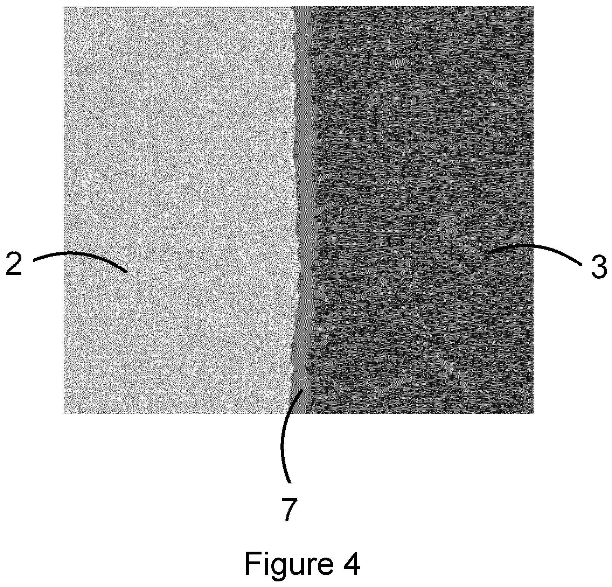

Figure 4 shows, at higher amplifications than in Figure 3, a detail of the cross-section of the joining area between the two materials to be welded (2, 3). In this case, the interface (7) between both materials can be seen. It can be seen how this interface is very thin, barely 3 micrometers thick. This thin interface (7) between the two materials to be welded (2, 3) ensures a good metallurgical joint and good mechanical properties of the joint.

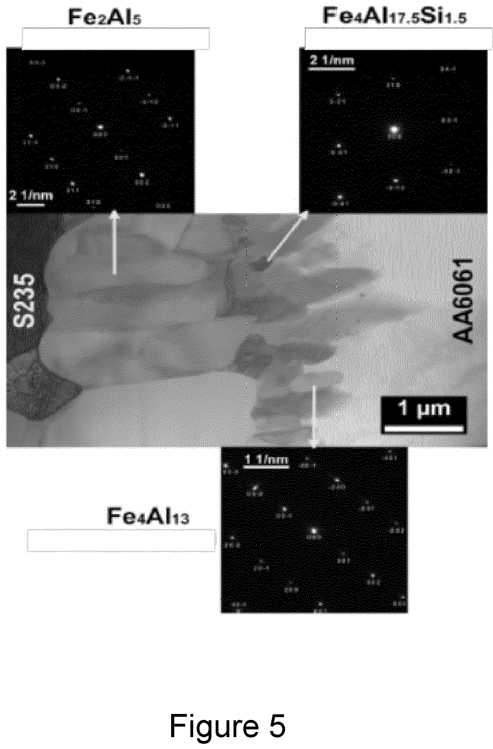

Figure 5 shows in greater detail the interface (7) between two materials (2, 3) welded by means of the method object of the present invention. In this case, the interface consists of mild steel S235 (which is the material having a higher melting point (2) of the two) and aluminum alloy AA6061 (which is the material having a lower melting point (3) of the two materials to be joined). The image in the center shows a micrograph obtained by means of an electron scanning microscope. The different grains forming the interface (7) between the two materials to be joined (2, 3) can be seen. The three remaining images depict the corresponding electron diffraction patterns corresponding to the three intermetallic compounds formed when welding steel S235 and the aluminum alloy. These intermetallic compounds are Fe2Al5, Fe4Al13, and Fe4Al17.5Si1.5. This Fe-, Al-, and Si-based ternary compound is responsible for the good mechanical properties of the welded joint (9) produced by means of the method object of the present invention.

In a preferred embodiment, the laser beam (1) is from a laser source having a wavelength within the range of 157 nm to 10064 nm, an irradiance of between 500 W/mm² and 2000 W/mm², the diameter of the area irradiated (5) by the laser beam (1) of between 0.1 mm and 3 mm, the interaction time between the laser beam (1) and the material (3) of between 100 ms and 250 ms, the specific point energy of between 300 J and 500 J, the specific energy relative to the offset distance (6) of between 250 and 550 J/mm, and the welding wire feeding speed of between 10 and 100 mm/s. And more preferably, the laser beam (1) is from a laser source having a wavelength within the range of 300 nm to 2000 nm, an irradiance of between 800 W/mm² and 1000 W/mm², the diameter of the area irradiated (5) by the laser beam (1) of between 0.2 mm and 2.4 mm, the interaction time between the laser beam (1) and the material (3) of between 150 ms and 200 ms, the specific point energy of between 350 J and 400 J, the specific energy relative to the offset distance (6) of between 300 and 500 J/mm, and the welding wire feeding speed of between 20 and 50 mm/s.

In a particular embodiment of the method of the invention, the laser beam (1) is generated in a laser source selected from Nd:YAG, Nd:glass, Nd:YVO₄, Er:YAG, Yb:YAG, Tm:YAG, diode, fiber, disk, CO₂, CO, HeCd, copper vapor laser, iodine laser, argon laser, krypton laser, or chemical lasers (HF, DF).

In a particular embodiment, the offset distance (6) at which the laser beam (1) is focused is comprised between 0.1 mm and 10 mm, and more preferably between 0.5 mm and 2 mm.

In a particular embodiment, the welding wire used can be ER1100, ER 1050, ER 2319, ER 4047, ER 5052, ER 5056, or ER 5356, and more preferably ER4047 or ER5356.

In a particular embodiment, the powder auxiliary material can be made of alloys containing Si, alloys containing Si and Al, alloys containing Si, Al, and Mg, and more preferably alloys AlSi5, AlSi10, AlSi12, AlSi10Mg, Al7Si0.3Mg, Ni11Cr3.7Si2.75Fe2.2B0.5C, Al5Si, Al10Si0.4Mg, and even more preferably alloys AlSi5, AlSi10, or AlSi12.

### EXAMPLE

A fiber laser beam (1) (1070 nm) having a mean power of 3000 W, operating at a working power of 2200 W, an irradiance of 1000 W/mm², with the diameter of the area irradiated (5) by the laser beam (1) of 1.7 mm, the interaction time between the laser beam (1) and the material of 175 ms, and the offset distance (6) of 1.3 mm, was used. Under these conditions, a S235 mild steel sheet was welded in a butt welding configuration with another AA6061 aluminum alloy sheet without requiring the prior machining of the joining area (9) of the two parts to be welded (2, 3). To that end, an auxiliary material in AlSi12 powder form was used in combination with a welding wire having an AlSi5 composition fed at a speed of 25 mm/s.

With the method object of the invention and under the described conditions, an excellent metallurgical joint, as shown in Figure 5, was obtained. The formation of a layer of binary FeAl intermetallic compounds, as well as the formation of an intermetallic Fe4Al17.5Si1.5 compound can be observed. This Fe-, Al-, and Si-based ternary compound is responsible for the good mechanical properties of the welded joint (9) produced by means of the method object of the present invention. In a tensile test, 169 MPa of maximum breaking stress and 3.6% elongation stress were obtained. This maximum breaking stress value is higher than the minimum threshold established by the National Aeronautics and Space Administration (NASA) of the United States of America to validate welded joints made of similar AA6061-T6 alloy materials. This demonstrates the merit of the method object of the present invention.

Having sufficiently described the nature of the present invention, as well as the way to carry it out into practice, it only remains to add that changes in shape, materials, and arrangement can be introduced in the invention as a whole and in parts making up the invention provided that said alterations remain within the scope of the appended claims.

## Claims

1. A method for welding two parts made of dissimilar metal materials (2, 3) in a butt welding configuration by means of a laser beam (1), wherein one metal material (3) has a lower melting point than the other metal material (2), **characterized in that** it comprises the following steps:
- before contacting the two parts applying an auxiliary material in powder form on the edge of one or of both parts made of dissimilar metal materials (2, 3) to be joined, the auxiliary material being applied right in the contact area (9) between the two dissimilar metal materials (2, 3) to be welded,
- placing the two parts made of dissimilar metal materials (2, 3) to be joined facing one another in a butt welding configuration, establishing the contact area (9) between the two parts made of dissimilar metal materials (2, 3),
- applying a laser beam (1) on the part made of a material having a lower melting point (3), the laser beam (1) being focused such that the diameter of the irradiated area (5) is such that the irradiance reached on the material having a lower melting point (3) allows melting this material (3) without the material having a higher melting point (2) melting,
- providing a welding wire in the irradiated area (5), simultaneously with the interaction of the laser beam (1) with the material having a lower melting point (3), wherein the auxiliary material and the welding wire also melt and mix with the material having a lower melting point (3).

2. **The** method according to claim 1, wherein the laser beam (1) is from a laser source the wavelength of which is within the range of 157 nm to 10064 nm, and preferably the wavelength is within the range of 300 nm to 2000 nm.

3. **The** method according to any of claims 1 and 2, wherein the irradiance of the laser beam (1) on the material having a lower melting point (3) is in the range between 500 W/mm² and 2000 W/mm², and more preferably in the range between 800 W/mm² and 1000 W/mm².

4. The method according to any of claims 1 to 3, wherein the diameter of the area irradiated (5) by the laser beam (1) is in the range between 0.1 mm and 3 mm, and more preferably the diameter of the area irradiated (5) by the laser beam (1) is in the range between 0.2 mm and 2.4 mm.

5. The method according to any of the preceding claims, wherein the laser source used for generating the laser beam (1) is selected from Nd:YAG, Nd:glass, Nd:YVO₄, Er:YAG, Yb:YAG, Tm:YAG, diode, fiber, disk, CO₂, CO, HeCd, copper vapor laser, iodine laser, argon laser, krypton laser, or chemical lasers (HF, DF).

6. The method according to any of the preceding claims, wherein the interaction time between the laser beam (1) and the material having a lower melting point (3) is in the range between 100 ms and 250 ms, and more preferably in the range between 150 ms and 200 ms.

7. The method according to any of the preceding claims, wherein the specific point energy of the laser beam (1) is in the range between 300 J and 500 J, and the specific energy relative to an offset distance (6) of the laser beam (1) from the contact area (9) is in the range between 250 and 550 J/mm, and more preferably the specific point energy is in the range between 350 J and 400 J, and the specific energy relative to an offset distance (6) of the laser beam (1) from the contact area (9) is in the range between 300 and 500 J/mm.

8. The method according to any of the preceding claims, wherein the welding wire feeding speed is in the range between 10 and 100 mm/s, and more preferably in the range between 20 and 50 mm/s.

9. The method according to any of the preceding claims which is carried out in vacuum or in the presence of an inert gas atmosphere, and more preferably this inert gas atmosphere is an atmosphere with He, Ar, N₂, or a mixture thereof.

10. The method according to any of the preceding claims, wherein an offset distance (6) from the contact area (9) at which the laser beam (1) is focused is comprised between 0.1 mm and 10 mm, and more preferably between 0.5 mm and 2 mm.

11. The method according to any of the preceding claims, wherein the welding wire used can be ER1100, ER 1050, ER 2319, ER 4047, ER 5052, ER 5056, or ER 5356, and more preferably ER4047 or ER5356.

12. The method according to any of the preceding claims, wherein the auxiliary material in powder form is made of alloys containing Si, alloys containing Si and Al, alloys containing Si, Al, and Mg, and more preferably alloys AlSi5, AlSi10, AlSi12, AlSi10Mg, Al7Si0.3Mg, Ni11Cr3.7Si2.75Fe2.2B0.5C, Al5Si, Al10Si0.4Mg, and even more preferably alloys AlSi5, AlSi10, or AlSi12.

13. The method according to the preceding claims, wherein the two dissimilar materials (2, 3) to be welded are, on one hand, an Fe-based material, and on the other an Al-based material, preferably, the material having a higher melting point (2) is steel, and the material having a lower melting point (3) is an aluminum alloy.

## Patentansprüche

1. Verfahren zum Schweißen von zwei aus unterschiedlichen Metallmaterialien gemachten Teilen (2, 3) in einer Stumpfschweißkonfiguration mittels eines Laserstrahls (1), wobei ein Metallmaterial (3) einen niedrigeren Schmelzpunkt aufweist als das andere Metallmaterial (2),
**gekennzeichnet dadurch, dass** es die folgenden Schritte aufweist:
- Aufbringen eines Hilfsmaterials vor dem in Kontakt Bringen der zwei Teile in Puder-Form auf den Rand von einem oder beiden der zu verbindenden, aus unterschiedlichen Metallmaterialien (2, 3) gemachten Teile, wobei das Hilfsmaterial direkt auf der Kontaktfläche (9) zwischen den zwei zu schweißenden, unterschiedlichen Metallmaterialien (2, 3) aufgebracht wird,
- Platzieren der zwei zu verbindenden, aus unterschiedlichen Metallmaterialien (2, 3) gemachten Teile einander in einer Stumpfschweißkonfiguration zugewandt, die Kontaktfläche (9) zwischen den zwei unterschiedlichen Metallmaterialien (2, 3) bildend,
- Anwenden eines Laserstrahls (1) auf das aus einem einen niedrigeren Schmelzpunkt aufweisenden Material (3) gemachte Teil, wobei der Laserstrahl (1) derart fokussiert wird, dass der Durchmesser der bestrahlten Fläche (5) derart ist, dass die auf dem einen niedrigeren Schmelzpunkt aufweisenden Material (3) erreichte Bestrahlungsstärke das Schmelzen dieses Materials (3) erlaubt, ohne dass das einen höheren Schmelzpunkt aufweisende Material (2) schmilzt,
- Bereitstellen eines Schweißdrahts in der bestrahlten Fläche (5) gleichzeitig mit der Interaktion des Laserstrahls (1) mit dem einen niedrigeren Schmelzpunkt aufweisenden Material (3), wobei das Hilfsmaterial und der Schweißdraht auch schmelzen und sich mit dem einen niedrigeren Schmelzpunkt aufweisenden Material (3) vermischen.

2. Verfahren nach Anspruch 1, wobei der Laserstrahl (1) aus einer Laserquelle stammt, deren Wellenlänge in dem Bereich von 157 nm bis 10064 nm ist und deren Wellenlänge bevorzugt in dem Bereich von 300 nm bis 2000 nm ist.

3. Verfahren nach einem der Ansprüche 1 und 2, wobei die Bestrahlungsstärke des Laserstrahls (1) auf dem einen niedrigeren Schmelzpunkt aufweisenden Material (3) in dem Bereich zwischen 500 W/mm² und 2000 W/mm² ist und mehr bevorzugt in dem Bereich zwischen 800 W/mm² und 1000 W/mm² ist.

4. Verfahren nach einem der Ansprüche 1 bis 3, wobei der Durchmesser der durch den Laserstrahl (1) bestrahlten Fläche (5) in dem Bereich zwischen 0,1 mm und 0,3 mm ist und mehr bevorzugt der Durchmesser der durch den Laserstrahl (1) bestrahlten Fläche (5) in dem Bereich zwischen 0,2 mm und 2,4 mm ist.

5. Verfahren nach einem der vorhergehenden Ansprüche, wobei die Laserquelle, die zum Generieren des Laserstrahls (1) verwendet wird, ausgewählt ist aus Nd:YAG, Nd:glass, Nd:YVO₄, Er:YAG, Yb:YAG, Tm:YAG, Diodenlaser, Faserlaser, Scheibenlaser, CO₂, CO, HeCd, Kupferdampflaser, Jodlaser, Argonlaser, Kryptonlaser oder chemische Laser (HF, DF).

6. Verfahren nach einem der vorhergehenden Ansprüche, wobei die Interaktionszeit zwischen dem Laserstrahl (1) und dem einen niedrigeren Schmelzpunkt aufweisenden Material (3) in dem Bereich zwischen 100 ms und 250 ms ist und mehr bevorzugt in dem Bereich zwischen 150 ms und 200 ms.

7. Verfahren nach einem der vorhergehenden Ansprüche, wobei die spezifische Punktenergie des Laserstrahls (1) in dem Bereich zwischen 300 J und 500 J ist und die spezifische Energie relativ zu einer Offset-Entfernung (6) des Laserstrahls (1) von der Kontaktfläche (9) in dem Bereich zwischen 250 und 550 J/mm ist und mehr bevorzugt die spezifische Punktenergie in dem Bereich zwischen 350 J und 400 J und die spezifische Energie relativ zu einer Offset-Entfernung (6) des Laserstrahls (1) von der Kontaktfläche (9) in dem Bereich zwischen 300 und 500 J/mm ist.

8. Verfahren nach einem der vorhergehenden Ansprüche, wobei die Schweißdrahtvorschubgeschwindigkeit in dem Bereich zwischen 10 und 100 mm/s ist und mehr bevorzugt in dem Bereich zwischen 20 und 50 mm/s ist.

9. Verfahren nach einem der vorhergehenden Ansprüche, das in einem Vakuum durchgeführt wird oder in der Gegenwart einer Inertgas-Atmosphäre mit He, Ar, N₂ oder einer Mischung davon.

10. Verfahren nach einem der vorhergehenden Ansprüche, wobei eine Offset-Entfernung (6) von der Kontaktfläche (9), bei der der Laserstrahl (1) fokussiert wird, zwischen 0,1 mm und 10 mm ist und mehr bevorzugt zwischen 0,5 mm und 2 mm.

11. Verfahren nach einem der vorhergehenden Ansprüche, wobei der verwendete Schweißdraht ER1100, ER 1050, ER 2319, ER 4047, ER 5052, ER 5056 oder ER 5356 sein kann und mehr bevorzugt ER4047 oder ER5356.

12. Verfahren nach einem der vorhergehenden Ansprüche, wobei das Hilfsmaterial in Puder-Form aus Legierungen enthaltend Si, Legierungen enthaltend Si und Al, Legierungen enthaltend Si, Al und Mg gemacht ist und mehr bevorzugt aus AlSi5, AlSi10, AlSi12, AlSi10Mg, Al7Si0,3Mg, Ni11Cr3,7Si2,75Fe2,2B0,5C, Al5Si, Al10Si0,4Mg Legierungen und noch mehr bevorzugt aus AlSi5, AlSi10 oder AlSi12 Legierungen.

13. Verfahren nach einem der vorhergehenden Ansprüche, wobei die zwei zu schweißenden, unterschiedlichen Materialien (2, 3) zum einen ein Fe-basiertes Material und zum anderen ein Al-basiertes Material sind, bevorzugt ist das einen höheren Schmelzpunkt aufweisende Material (2) Stahl und das einen niedrigeren Schmelzpunkt aufweisende Material (3) eine Aluminium-Legierung.

## Revendications

1. Procédé de soudage de deux pièces en matériaux métalliques dissemblables (2, 3) dans une configuration de soudage bout à bout au moyen d'un faisceau laser (1), dans lequel un matériau métallique (3) a un point de fusion inférieur à celui de l'autre matériau métallique (2),
caractérisé en qu'il comprend les étapes suivantes :
- avant de mettre en contact les deux parties, appliquer un matériau auxiliaire sous forme de poudre sur le bord de l'un des deux ou des deux pièces en matériaux métalliques dissemblables (2, 3) à assembler, le matériau auxiliaire étant appliqué directement dans la zone de contact (9) entre les deux matériaux métalliques dissemblables (2, 3) à souder,
- placer les deux pièces en matériaux métalliques dissemblables (2, 3) à assembler l'une en face de l'autre dans une configuration de soudage bout à bout établissant la zone de contact (9) entre les deux pièces constituées de matériaux métalliques dissemblables (2, 3),
- appliquer un faisceau laser (1) sur la partie constituée d'un matériau ayant un point de fusion inférieur (3), le faisceau laser (1) étant focalisé de telle sorte que le diamètre de la zone irradiée (5) soit tel que l'irradiance atteinte sur le matériau ayant un point de fusion inférieur (3) permette la fusion de ce matériau (3) sans que le matériau ayant un point de fusion supérieur (2) ne fonde,
- fournir un fil de soudure dans la zone irradiée (5), simultanément à l'interaction du faisceau laser (1) avec le matériau ayant un point de fusion inférieur (3), le matériau auxiliaire et le fil de soudage fondant également et se mélangeant au matériau ayant un point de fusion inférieur (3).

2. Procédé selon la revendication 1, dans lequel le faisceau laser (1) provient d'une source laser dont la longueur d'onde est comprise dans la plage de 157 nm à 10064 nm, et de préférence de 300 nm à 2000 nm.

3. Procédé selon l'une quelconque des revendications 1 et 2, dans laquelle l'irradiance du faisceau laser (1) sur le matériau ayant un point de fusion inférieur (3) se situe dans la plage entre 500 W/mm² et 2000 W/mm², et plus préférentiellement dans la plage entre 800 W/mm² et 1000 W/mm².

4. Procédé selon l'une quelconque des revendications 1 à 3, dans lequel le diamètre de la zone irradiée (5) par le faisceau laser (1) est dans la plage entre 0,1 mm et 3 mm, et, de préférence, le diamètre de la zone irradiée (5) par le faisceau laser (1) est dans la plage entre 0,2 mm et 2,4 mm.

5. Procédé selon l'une quelconque des revendications précédentes, dans lequel la source laser utilisée pour générer le faisceau laser (1) est choisie parmi Nd:YAG, Nd:verre, Nd:YVO₄, Er:YAG, Yb:YAG, Tm:YAG, diode, fibre, disque, CO₂, CO, HeCd, laser à vapeur de cuivre, laser à iode, laser à argon, laser à krypton ou lasers chimiques (HF, DF).

6. Procédé selon l'une quelconque des revendications précédentes, dans lequel le temps d'interaction entre le faisceau laser (1) et le matériau ayant un point de fusion inférieur (3) est dans la plage entre 100 ms et 250 ms, et plus préférentiellement dans la plage entre 150 ms et 200 ms.

7. Procédé selon l'une quelconque des revendications précédentes, dans lequel l'énergie ponctuelle spécifique du faisceau laser (1) est dans la plage entre 300 J et 500 J, et l'énergie spécifique par rapport à une distance de décalage (6) du faisceau laser (1) de la zone de contact (9) se trouve dans la plage entre 250 et 550 J/mm, et plus préférentiellement le point spécifique est comprise entre 350 J et 400 J, et l'énergie spécifique par rapport à une distance de décalage (6) du faisceau laser (1) de la zone de contact (9) est dans la plage entre 300 et 500 J/mm.

8. Procédé selon l'une quelconque des revendications précédentes, dans lequel la vitesse d'alimentation du fil de soudure est dans la plage entre 10 et 100 mm/s, et plus préférablement dans la plage entre 20 et 50 mm/s.

9. Procédé selon l'une quelconque des revendications précédentes, qui est mis en œuvre sous vide ou en présence d'une atmosphère de gaz inerte, et plus préférentiellement cette atmosphère de gaz inerte est une atmosphère avec He, Ar, N₂, ou un mélange de ceux-ci.

10. Procédé selon l'une des revendications précédentes, dans lequel une distance de décalage (6) de la zone de contact (9) sur laquelle le faisceau laser (1) est focalisé est comprise entre 0,1 et 10 mm, et plus préférentiellement entre 0,5 et 2 mm.

11. Procédé selon l'une quelconque des revendications précédentes, dans lequel le fil de soudure utilisé peut être ER1100, ER 1050, ER 2319, ER 4047, ER 5052, ER 5056, ou ER5356, et de préférence ER4047 ou ER5356.

12. Procédé selon l'une quelconque des revendications précédentes, dans lequel le matériau auxiliaire en poudre est fait en alliages contenant du Si, alliages contenant du Si et Al, alliages contenant Si, Al et Mg, et plus préférentiellement alliages AlSi5, AlSi10, AlSi12, AlSi10Mg, Al7Si0.3Mg, Ni11Cr3.7Si2.75Fe2.2B0.5C, Al5Si, Al10Si0.4Mg, et encore plus préférentiellement les alliages AISi5, AlSi10, ou AlSi12.

13. Procédé selon les revendications précédentes, dans lequel les deux matériaux dissemblables (2, 3) à souder sont, d'une part, un matériau à base de Fe et, d'autre part, un matériau à base d'Al, de préférence, le matériau ayant un point de fusion plus élevé (2) est de l'acier et le matériau ayant un point de fusion inférieur (3) est un alliage d'aluminium.
